# EUROPÄISCHE PATENTSCHRIFT

(11) **EP 1 319 444 B1**
(45) Veröffentlichungstag und Bekanntmachung des Hinweises auf die Patenterteilung: **13.08.2008**
(21) Anmeldenummer: 02027832.1
(22) Anmeldetag: 12.12.2002
(51) Int. Cl.: B05C 3/10, B65G 49/04

(54) **Anlage zum Behandeln von Massenteilen**
Device for treatment of articles
Dispositif de traitement de pièces de série

(30) Priorität: 12.12.2001 DE 10161086
(43) Veröffentlichungstag der Anmeldung: 18.06.2003
(73) Patentinhaber: WMV Apparatebau GmbH & Co.KG, 51570 Windeck (DE)
(72) Erfinder: Müller, Alois, 53773 Hennef-Haperscho (DE); Müller, Martin, 53773 Hennef (DE); Bube, Dirk, 51570 Windeck-Imhausen (DE); Schneider, Alfred, 53773 Hennef (DE)
(74) Vertreter: Neumann, Ernst Dieter

(56) Entgegenhaltungen:
- DE-A1- 2 936 925
- DE-A1- 4 217 615
- DE-C- 805 214
- US-A- 3 270 855
- US-A- 3 307 720
- US-A- 3 601 134
- US-A- 3 699 918
- US-A- 4 196 231
- US-A- 5 531 830

## Beschreibung

Die Erfindung betrifft eine Anlage zum Behandeln von in Transportkörben enthaltenen Massenteilen in Flüssigkeiten. Eine Anlage dieser Art ist aus der DE 20 30 591 C3 bekannt. Hierbei sind an einem horizontal verfahrbaren Transportwagen Greifermittel angeordnet, die Transportkörbe fassen und freigeben können. Mittels des Transportwagens sind die Transportkörbe horizontal verfahrbar und vertikal aufnehmbar und absetzbar. Unter den Führungsmitteln für den Transportwagen sind Behandlungsmaschinen mit Behandlungskammern angeordnet, die mit Flüssigkeit geflutet werden können und in die die Transportkörbe einsetzbar sind. Die Behandlungskammern verfügen über Aufnahmevorrichtungen für die Transportkörbe, die mit entsprechenden Drehantriebsmitteln versehen sind. Es sind weiterhin aus der DE 34 20 859 C2 Behandlungsmaschinen der vorstehend genannten Art bekannt, bei denen die Aufnahmevorrichtungen für die Transportkörbe mit den entsprechenden Drehantriebsmitteln um eine horizontale Achse geschwenkt werden können, um ein Umwälzen der Massenteile in der Flüssigkeit zu ermöglichen.

Es sind auch Anlagen bekannt geworden, bei denen an einem horizontal verfahrbaren Transportwagen Greifermittel für Transportkörbe vorgesehen sind, die Hub- und Absenkmittel sowie eigene Drehantriebsmittel für die Transportkörbe aufweisen. Unterhalb des Fahrweges des Transportwagens sind hierbei Becken angeordnet, die Behandlungsflüssigkeit enthalten und in die die Transportkörbe mittels der Hub- und Absenkmittel abgesenkt werden können. Nach dem Eintauchen unter die Flüssigkeitsoberfläche werden die Transportkörbe hierbei mit langsamer Drehzahl um eine vertikale Achse angetrieben und anschließend tropfnaß aus dem Becken ausgehoben und vom Transportwagen weitergefahren. Hierdurch wird Behandlungsflüssigkeit verschleppt und der Beckeninhalt nachfolgender Becken verunreinigt.

Aus der DE 42 17 615 A1 ist eine Anlage bekannt, bei der ein Transportwagen auf einer Einschienenbahn läuft, die an einer Raumdecke angebracht ist. Der Transportweg des Transportwagens führt über eine Reihe von Behandlungsbehälter, die mit Flüssigkeit gefüllt sein können. An dem Transportwagen ist ein Hängehalter zur Aufnahme von Transportkästen über zwei Paare von Kettenzügen aufgehängt, die über zwei unabhängige Hebezeuge aufgespult oder abgelassen werden können. An dem freihängenden Hängehalter sind sich gegenüberliegende Zapfen angeordnet, die in sich gegenüberliegende V-förmige Stützen einführbar sind, die an den Rändern der Behandlungsbehälter fest angeordnet sind. Die Transportkästen sind in den Hängehalter frei eingesetzt. Über ein gegensinniges Betätigen der beiden Hebezeuge kann der Hängehalter durch die Paare von Kettenzügen hin- und hergekippt werden, um Massenteile in den Transportkästen umzulagern. In einer tiefsten Position, in der der Hängehalter innerhalb eines Behandlungsbehälters ggfs. unter einem Flüssigkeitsspiegel liegt, ist er hierbei in den V-förmigen Stützen kippbar aufgelagert, in einer höheren Position oberhalb eines Behandlungsbehälters hängt er freischwingend an den Paaren von Kettenzügen. Mehr als ein Abtropfenlassen von Flüssigkeit in dieser höheren Position ist hierbei zur Vermeidung eines Verschleppens von Behandlungsflüssigkeit nicht möglich.

Aus der US 4 196 231 welche als nächstliegender Stand des Technik angesehen wird, ist eine Anlage zum Beschichten von Teilen mit einer Zentrifuge und einem Tank bekannt. An seinem oberen Ende hat der Tank einen Ring, an dem sich Klauen einer Klappvorrichtung festhalten können. Die Ausklappvorrichtung trägt weiter einen Rahmen, an dessen oberem Ende ein Augenstück angebracht ist. An diesem Augenstück kann der Rahmen samt Ausklappvorrichtung angehoben werden.

Die US 3 601 134 zeigt eine Anlage zum Beschichten von Massenteilen mit einem Rahmenwerk, an dem ein Kranwagen entlang fahrbar ist. In dem Kranwagen ist ein Korbhänger aufgenommen, der einen Korb tragen kann. Zum Beschichten der Massenteile kann der Korb in Tanks abgesenkt werden. Die Tanks haben an jeder Seite Paare von Sattelteilen, in die Zapfen des Korbhängers zur Positionierung eingreifen können.

Die US 3 307 720 zeigt eine ähnliche Anlage, bei der an den Behandlungsstationen Sattelteile vorgesehen sind. In die Sattelteile kann der Träger mit Pinnen eingreifen, um gegenüber dem Becken positioniert zu werden.

Der vorliegenden Erfindung liegt die Aufgabe zugrunde, eine Anlage zum Behandeln von in Transportkörben enthaltenen Massenteilen in Flüssigkeiten bereitzustellen, die alle Möglichkeiten von Anlagen der eingangs genannten Art mit vollständig ausgebildeten Behandlungsmaschinen bereithält, jedoch wesentlich vereinfacht aufgebaut ist.

Die Lösung hierfür besteht in einer Anlage der genannten Art, umfassend zumindest ein Becken, das Flüssigkeit enthält, zum Eintauchen der Transportkörbe; mindestens einen Transportwagen, mit dem die Transportkörbe über das zumindest eine Becken verfahrbar sind; mindestens einen Korbträger, der einen Transportkorb greifen, in das Becken eintauchen, aus dem Becken ausheben und um eine Achse drehend antreiben kann, wobei der Korbträger einen Schlitten, der in senkrechten Führungen verfahrbar ist, sowie Greifermittel für den Transportkorb umfaßt, wobei der Korbträger mit den Greifermitteln um eine horizontale Schwenkachse gegenüber dem Schlitten schwenkbar ist; sowie Verspannmittel zum Verspannen des Korbträgers gegenüber ortsfesten Teilen nahe dem zumindest einen Becken. Die genannten Verspannmittel ermöglichen es, den Korbträger im Verhältnis zu einem Behandlungsbecken sicher abzustützen, um auch schwere und unwuchtig befüllte Transportkörbe um ihre Achse mit einer zum Abschleudern der Flüssigkeit erforderlichen erhöhten Drehzahl anzutreiben. Das Verspannen kann insbesondere in zwei verschiedenen Positionen erfolgen, nämlich zum einen bei unter die Flüssigkeitsoberfläche eingetauchtem Transportkorb, um Wasch- und Spülvorgänge mit niedriger Drehzahl auszuführen, und zum anderen mit oberhalb der Flüssigkeitsoberfläche hängendem Transportkorb, um dort mit erhöhter Drehzahl einen Abschleudervorgang auszuführen. In vorteilhafter Weise entfällt hiermit das entsprechende Abpumpen der Behandlungsflüssigkeit zum Abschleudern, wie es bei Behandlungsmaschinen mit fest installiertem Trommelantrieb und bei nur einer Verspannposition erforderlich ist. Besonders bei Anlagen zur Behandlung der Massenteile mit einer Anzahl von verschiedenen Reinigungs-, Beschichtungs- oder Behandlungsschritten in verschiedenen Flüssigkeiten ergibt sich der Vorteil, daß nur eine Reihe von einfachen Becken mit entsprechenden Reinigungs-, Beschichtungs- und Behandlungsflüssigkeiten aufgestellt werden muß, während Transportmittel und Drehantriebsmittel nur einmal am Transportwagen angeordnet vorzusehen sind.

Nach einer ersten Ausführung kann der Transportwagen auf einem in einem Gestell oder an einer Raumdecke aufgehängten Schienenpaar über das zumindest eine Becken verfahrbar sein. Bei hängender Anordnung des Transportwagens ist auch eine Einzelschiene ausreichend. Nach einer anderen Ausführung kann der Transportwagen, insbesondere bei begrenzter Raumhöhe, auf einem am Beckenrand des zumindest einen Beckens angeordneten Schienenpaar über das Becken verfahrbar sein. Schließlich kann bei einseitig begrenzten Raumverhältnissen der Transportwagen auf einem seitlich entlang des zumindest einen Beckens angeordneten Schienenpaar verfahrbar sein und einen über das Becken ragenden Kragarm haben.

Erst durch die erfindungsgemäßen Verspannmittel wird der Vorgang des Abschleuderns möglich, für den aufgrund möglicher Unwuchten infolge ungünstiger Verteilung der Massenteile im Transportkorb eine wirksame radiale Abstützung mit kurzem Hebelarm erforderlich ist. Die Verspannmittel am Becken können so ausgeführt sein, daß der vom Transportwagen abgesenkte Korbträger zumindest in einer unteren Endposition alleine durch das Absenken in eine Einspannung eingeführt wird. Es ist vorgesehen, daß der Korbträger einen Schlitten umfaßt, der in senkrechten Führungen verfahrbar ist. Die Verspannmittel können unmittelbar am Korbträger angreifen. Soweit die Verspannmittel beweglich ausgeführt sind, können sie am Schlitten befestigt sein und auf ortsfeste Führungen einwirken oder an ortsfesten Führungen befestigt sein und auf den Schlitten einwirken. Schließlich können die Verspannmittel ortsfest angeordnet sein und auf am Transportwagen angeordnete Führungen für den Schlitten einwirken.

In einer ersten bevorzugten konstruktiven Ausführung ist vorgesehen, daß der Transportwagen erste senkrechte Führungen umfaßt, daß nahe dem zumindest einen Becken zweite senkrechte Führungen ortsfest angebracht sind, in die der Schlitten bei fluchtenden ersten und zweiten Führungen überführbar ist, und daß die Verspannmittel zumindest in einer tieferen Eintauchposition des Transportkorbes im Becken unter den Flüssigkeitsspiegel zwischen dem Schlitten und den ortsfesten zweiten Führungen zur Wirkung bringbar sind. Hierbei können die ersten Führungen relativ kurz ausgeführt werden und die zweiten ortsfesten Führungen am zumindest einen Becken entsprechend weit nach oben geführt werden. Die zweiten Führungen sollten hierbei so weit nach unten reichen, daß die Verspannung in einer tiefen Position mit unter den Flüssigkeitsspiegel untergetauchtem Transportkorb und jedenfalls in einer höheren Position des Transportkorbes oberhalb des unveränderten Flüssigkeitsspiegels möglich wird.

In einer zweiten Ausführung ist vorgesehen, daß der Transportwagen erste senkrechte Führungen umfaßt, daß nahe dem zumindest einen Becken dritte senkrechte Führungen ortsfest angebracht sind, in die der Schlitten bei fluchtenden ersten und dritten Führungen überführbar ist, und daß die Verspannmittel in einer höheren Abschleuderposition des Transportkorbes im Becken oberhalb des Flüssigkeitsspiegels zwischen dem Schlitten und den ortsfesten dritten Führungen wirksam werden.

Hierbei können zweite und dritte Führungen nebeneinander angeordnet werden, wobei die dritten Führungen weniger weit nach unten reichen können. Dies ist insbesondere möglich, wenn der Schlitten am unteren Ende der zweiten und dritten Führungen jeweils ohne Inanspruchnahme beweglicher Verspannmittel alleine durch das Absenken bis auf einen Endanschlag in den sich verengenden Führungen eingespannt wird.

In einer dritten Ausführung ist vorgesehen, daß der Transportwagen erste senkrechte Führungen umfaßt und daß nahe dem zumindest einen Becken Verspannmittel ortsfest angebracht sind, in die die ersten senkrechten Führungen einfahrbar sind und daß die ortsfesten Verspannmittel gegenüber den ersten Führungen zumindest in einer Abschleuderposition des Transportkorbes im Becken oberhalb des Flüssigkeitsspiegels zur Wirkung bringbar sind.

In bevorzugter Ausführung ist vorgesehen, daß der Korbträger radial zustellbare Greifermittel für den Transportkorb umfaßt, die den Transportkorb zumindest dreifach am Umfang halten, und daß der Korbträger Drehantriebsmittel für die genannten Greifermittel hat, die auch ein Abschleudern mit erhöhter Drehzahl ermöglichen. Erfindungsgemäß wird vorgeschlagen, daß der Korbträger mit den Greifermitteln um eine horizontale Schwenkachse gegenüber dem Schlitten schwenkbar ist. Dies ermöglicht es, den Transportkorb in einer schräg gestellten Position, insbesondere nur zum Teil in die Flüssigkeit eingetaucht, drehend anzutreiben, wodurch eine verstärkte Umwälzbewegung der Massenteile innerhalb des Transportkorbes zustandekommt.

Bevorzugt verläuft die horizontale Schwenkachse parallel zur Transportrichtung des Transportwagens. Dies ist insbesondere bei einer Aneinanderreihung von mehreren Becken günstig, da durch die hiermit bedingte Art der Schwenkbewegung zwar eine größere Breite der einzelnen Becken erforderlich werden kann, jedoch die Länge in Richtung ihrer Aneinanderreihung äußerst kompakt im Verhältnis zum Durchmesser des Transportkorbes gehalten werden kann.

Der Korbträger ist in einer bevorzugten Ausführung über aufrollbare Tragbänder am Transportwagen angehängt. Parallel zur den Tragbändern laufen flexible und elastische Kabel oder Schläuche zum Korbträger als Mittel zur Energieversorgung der Greifermittel und der Drehantriebsmittel.

In einer weiterführenden Ausführung kann vorgesehen sein, daß der Korbträger vom Transportwagen lösbar ist. Hierzu kann beispielsweise vorgesehen werden, daß der Korbträger über Hubzylinder am Transportwagen aufgehängt ist und die Hubzylinder ausklinkbar am Korbträger befestigt sind. In diesem Fall sind Mittel zur Energieversorgung zum Korbträger für die Greifermittel und die Drehantriebsmittel im Bereich der Verspannmittel vorzusehen, die somit ebenfalls trennbar sein müssen. Das heißt, die Energieversorgung wird erst angeschlossen, wenn der Korbträger seine untere Position erreicht hat und sie wird wieder getrennt, wenn der Korbträger wieder in den Transportwagen überführt wird.

Nach einer alternativen Ausführung kann der Drehantrieb hierbei z. B. ein einfacher ortsfester Reibradantrieb im Bereich des Beckens sein. Die Greifermittel können hierbei durch Federvorspannung geschlossen gehalten werden, so daß bei Trennung des Korbträgers vom Transportwagen keine Energieversorgung zum Korbträger erforderlich ist.

Die hiermit genannte trennbare Ausführung von Korbträger und Transportwagen hat den Vorteil, daß mit einem einzigen Transportwagen mehrere Korbträger gehandled werden können und somit bei einer Mehrzahl von Becken diese teilweise gleichzeitig mit einem Transportkorb besetzt sein können.

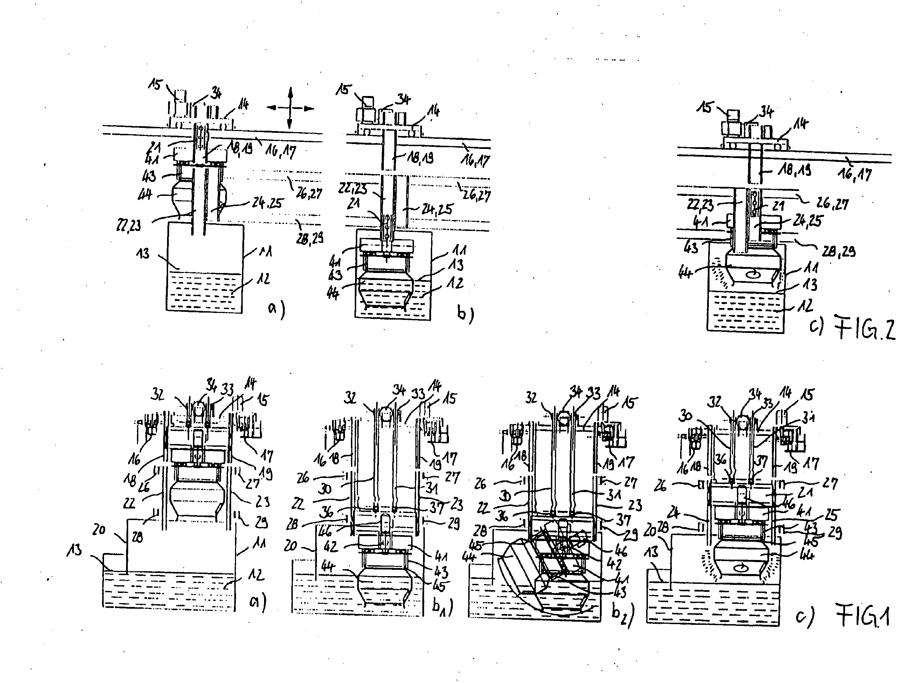

Bevorzugte Ausführungsbeispiele der Erfindung sind in den Zeichnungen dargestellt und werden nachstehend beschrieben. Hierin zeigen
- Figur 1: eine erfindungsgemäße Anlage in einer ersten Ausführung in einem Querschnitt senkrecht zur Bewegungsrichtung des Transportwagens
a) mit dem Transportkorb in einer Position zum Horizontaltransport in seiner ersten Führung,
b₁) bei in die Behandlungsflüssigkeit eingetauchtem Transportkorb in einer zweiten Führung,
b₂) bei eingetauchtem und um eine horizontale Achse geschwenkten Transportkorb in der zweiten Führung,
c) mit aus der Behandlungsflüssigkeit ausgehobenem Transportkorb in einer dritten Führung;
- Figur 2: eine erfindungsgemäße Anlage nach Figur 1 in einem Längsschnitt in der Bewegungsrichtung des Transportwagens
a) mit dem Transportkorb in einer Position zum Horizontaltransport in seiner ersten Führung,
b) mit dem Transportkorb in einer unter die Behandlungsflüssigkeit eingetauchten Position in einer zweiten Führung,
c) mit dem Transportkorb in einer über dem Flüssigkeitsspiegel festgesetzten Position in einer dritten Führung;
- Figur 3: zeigt eine erfindungsgemäße Anlage mit drei Becken in einer zweiten Ausführung in einer Ansicht senkrecht zur Bewegungsrichtung des Transportwagens;
- Figur 4: zeigt eine erfindungsgemäße Anlage nach Figur 3 in Querschnitten senkrecht zur Bewegungsrichtung des Transportwagens
a) bei in die Behandlungsflüssigkeit eingetauchtem Transportkorb
b) bei eingetauchtem und um eine horizontale Achse geschwenktem Transportkorb
c) mit aus der Behandlungsflüssigkeit ausgehobenem Transportkorb;
- Figur 5: zeigt eine erfindungsgemäße Anlage ähnlich Figur 3 in Querschnitten senkrecht zur Bewegungsrichtung des Transportwagens in einer dritten Ausführung
a) bei in die Behandlungsflüssigkeit eingetauchtem Transportkorb
b) bei eingetauchtem und um eine horizontale Achse geschwenktem Transportkorb
c) mit aus der Behandlungsflüssigkeit ausgehobenem Transportkorb;
- Figur 6: zeigt eine erfindungsgemäße Anlage ähnlich Figur 3 in Querschnitten senkrecht zur Bewegungsrichtung des Transportwagens in einer vierten Ausführung
a) bei in die Behandlungsflüssigkeit eingetauchtem Transportkorb
b) bei eingetauchtem und um eine horizontale Achse geschwenktem Transportkorb
c) mit aus der Behandlungsflüssigkeit ausgehobenem Transportkorb;

Die Figuren 1 und 2 werden nachstehend gemeinsam beschrieben.

Die erfindungsgemäße Anlage umfaßt in der Regel eine Reihe von Becken 11, die mit einer Behandlungsflüssigkeit 12 bis zu einem Flüssigkeitsspiegel 13 gefüllt sind. Über den Becken 11 ist ein Schienenpaar 16, 17 angeordnet, auf dem zumindest ein Transportwagen 14 längs über die Reihe der Becken 11 verfahrbar ist. Die Becken 11 haben relativ zur Mitte des Schienenpaares 16, 17 einseitige Erweiterungen 20. Der Transportwagen 14 weist einen Fahrantriebsmotor 18 auf.

Am Transportwagen 14 ist ein Paar von senkrechten ersten Führungen 18, 19 angebracht, in denen ein Schlitten 21 senkrecht verfahrbar ist, an dem ein Korbträger 41 befestigt ist. An jedem der Becken sind zwei Paare von weiteren senkrechten ortsfesten Führungen 22, 23, 24, 25 angeordnet, die in der Führungsweite und in der Ausgestaltung mit den Führungen 18, 19 übereinstimmen. Die Führungen schließen bei entsprechender Halteposition des Transportwagens so unmittelbar längs aneinander an, daß der Schlitten 21 von den Führungen 18, 19 in die Führungen 22, 23 oder in die Führungen 24, 25 überführt werden kann. Die ortsfesten zweiten Führungen 22, 23 reichen weiter nach unten als die ortsfesten dritten Führungen 24, 25. Am unteren Ende der Führungen 22, 23, 24, 25 oder am Schlitten 21 sind Verspannmittel angebracht, die den Schlitten mit dem jeweiligen Paar von ortsfesten Führungen spielfrei verspannen können. Solche Verspannmittel können in der einfachsten Ausgestaltung in einer Verengung am unteren Ende der ortsfesten Führungen bestehen, wobei der Schlitten 21 bevorzugt mit in die Führung eingreifenden Führungsrollen ausgestattet sein kann. Solche Verspannmittel können in anderer Ausführung am Schlitten 21 befestigte Spreizbacken sein, die sich gegenüber den ortsfesten Führungen festsetzen. Die ortsfesten Führungen 22, 23, 24, 25 sind in Paaren von längsverlaufenden Trägern 26, 27, 28, 29 gehalten, die ihrerseits gebäudeseitig ortsfest verankert sind.

Der Schlitten 21 ist am Transportwagen 14 an Tragbändern 30, 31 angehängt, die mittels eines Hubantriebsmotors 34 auf Trommeln 32, 33 aufwickelbar sind. Die verschiedenen Haltepositionen des Korbträgers 41 können mit berührungslosen Näherungsschaltern am Schlitten 21 einerseits und an den Führungen andererseits vorgegeben und kontrolliert werden. Die Tragbänder 30, 31 mit dem entsprechenden Hubantriebsmotor können durch Hubzylinder ersetzt werden. Im vorliegenden Fall haben die Hubbänder feste Anlenkpunkte 36, 37 am Schlitten 21. Die Hubzylinder könnten jedoch auch an dieser Stelle ausklinkbar ausgeführt sein. Am Schlitten 21 ist ein Korbträger 41 um eine horizontale Schwenkachse 42 schwenkbar aufgehängt. Die Schwenkantriebsmittel sind nicht im einzelnen dargestellt. Es kann sich hierbei um einen mit Hebelwirkung am Schlitten und am Korbträger angreifenden Stellzylinder handeln. Der Korbträger 41 umfaßt weiterhin umfangsverteilte radialbewegliche Greifermittel 43, die einen Transportkorb 44 mit durchbrochenem Mantel an einem oberen Korbrand 45 greifen können. Bevorzugt sind drei gleichmäßig umfangsverteilte radialbewegliche Greiferarme vorgesehen.

In den Figuren 1a und 2a ist der Schlitten 21 mit den ersten Führungen 18, 19 in den Bereich der ortsfesten zweiten Führungen 22, 23 eingefahren, wobei die untere Kante des an den Korbträger 41 anhängenden Transportkorbes 44 über der oberen Kante eines Beckens 11 liegt. In dieser Position des Korbträgers 41 kann der Transportwagen 14 horizontal verfahren werden. In der in den Figuren 1a und 2a dargestellten Position ist das Paar der ersten Führungen 18, 19 am Transportwagen 14 in eine fluchtende Position mit den zweiten Führungen 22, 23 am Becken 11 gefahren.

Wie in den Figuren 1b, 2b dargestellt, ist in der zuvor angegebenen Halteposition des Transportwagens 14 durch Abrollen der Tragbänder 30, 31 der Schlitten 21 in die ortsfesten Führungen 22, 23 abgesenkt werden, wo er an deren unteren Ende mit diesen durch nicht dargestellte Verspannmittel verspannt wird. Der Transportkorb 44 taucht in dieser Position des Korbträgers 41 weitgehend unter die Oberfläche 13 der Behandlungsflüssigkeit 12 ein.

Wie in Figur 1b₂ dargestellt ist, kann der Transportkorb 44 bei am unteren Ende der Führungen 22, 23 festgesetztem Schlitten 21 mit dem Korbträger 41 um eine horizontale Achse 42 aus einer senkrechten in eine geneigte Stellung geschwenkt werden. In der geneigten Stellung taucht der Transportkorb nur noch teilweise unter den Flüssigkeitsspiegel 13 der Behandlungsflüssigkeit 12 ein. In dieser geneigten Stellung ist der Transportkorb von einem Drehantriebsmotor 46 im Korbträger 41 rotierend antreibbar, so daß die im Transportkorb 44 enthaltenen Massenteile ständig in der Behandlungsflüssigkeit umgewälzt werden, wobei innere Rippen im Transportkorb 44 den Umwälzvorgang verstärken können. Der Transportkorb nimmt in dieser Stellung die einseitige Erweiterung 20 des Beckens 11 in Anspruch.

In den Figuren 1c, 2c ist eine Position des Korbträgers gezeigt, die erreicht worden ist, nachdem der Korbträger zunächst wieder in die in den Figuren 1b₁, 2b gezeigte Stellung zurückgeschwenkt worden ist und anschließend in die in den Figuren 1a, 2a gezeigte Transportposition angehoben worden ist. Danach ist der Transportwagen 14 so weit nach rechts in eine zweite Halteposition verfahren worden, daß die ersten Führungen 18, 19 am Transportwagen nunmehr mit den kürzeren ortsfesten dritten Führungen 24, 25 am Becken fluchten. Danach ist der Schlitten 21 durch Abrollen der Tragbänder 30, 31 bis ans untere Ende der ortsfesten dritten Führungen 24, 25 abgelassen worden, wo er mittels der Verspannmittel festgesetzt worden ist. In dieser Position kann nun der Transportkorb 44 vom Drehantriebsmotor im Korbträger 41 mit hoher Drehzahl angetrieben werden, wobei an den Massenteilen anhaftende Behandlungsflüssigkeit durch die durchbrochene Korboberfläche abgeschleudert wird. Im Anschluß an diesen Vorgang kann der Schlitten 21 wieder in die in den Figuren 1a, 2a gezeigte Transportposition angehoben werden, wonach der Transportwagen 14 dann auf den Schienen 16, 17 horizontal zu einem weiteren Becken verfahren werden kann, welches mit einer andersartigen Behandlungsflüssigkeit oder Spülflüssigkeit gefüllt ist und wo sich der hier gezeigte Vorgang mit allen Schritten nach Figur 1 wie unter a, b₁, b₂ und c gezeigt oder zumindest mit den Schritten wie in Figur 2 unter a, b und c gezeigt erneut abläuft.

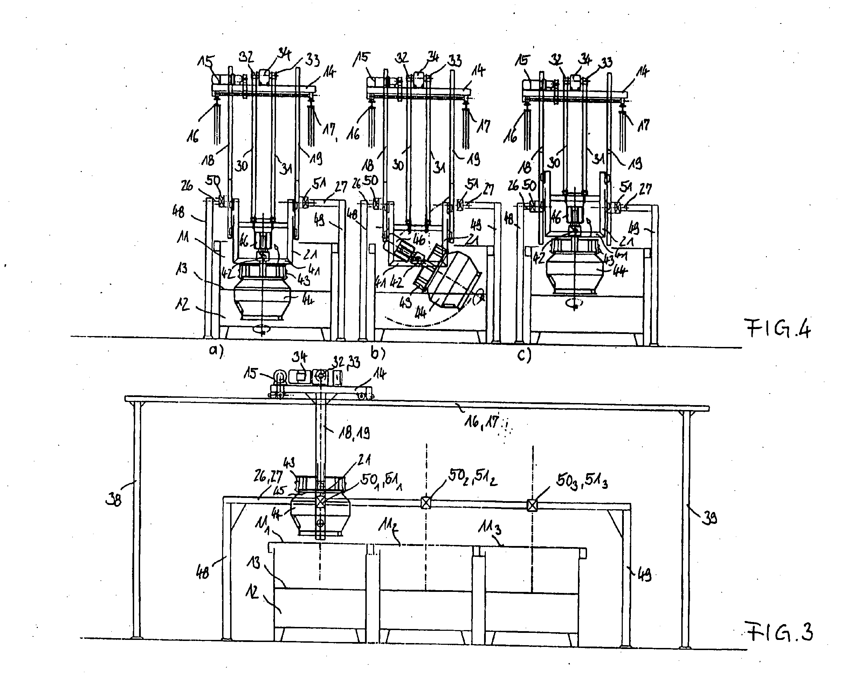

Die Figuren 3 und 4 werden nachstehend gemeinsam beschrieben.

Die erfindungsgemäße Anlage umfaßt eine Reihe von drei Becken 11, die mit geringerem Abstand in einer Reihe hintereinander angeordnet sind. Die Becken 11 sind mit einer Behandlungsflüssigkeit 12 bis zu einem Flüssigkeitsspiegel 13 gefüllt. Über den Becken 11 ist ein Schienenpaar 16, 17 angeordnet, auf dem ein Transportwagen 14 längs über die Reihe der Becken 11 verfahrbar ist. Das Schienenpaar ist auf Ständern 38, 39 aufgeständert, es könnte auch an einer Raumdecke aufgehängt sein. Die Becken 11 sind relativ zur Mitte des Schienenpaares 16, 17 außermittig versetzt. Der Transportwagen 14 weist einen Fahrantriebsmotor 15 auf. Der Transportwagen 14 ist in Transportrichtung mittig über dem ersten der Becken 11₁ angehalten. Am Transportwagen 14 ist ein Paar von senkrechten ersten Führungen 18, 19 angebracht, in denen ein Schlitten 21 senkrecht verfahrbar ist, in dem ein Transportkorb 44 gehalten ist. An jedem der Becken ist ein Paar von ortsfesten Verspannmitteln 50, 51 angeordnet, deren Abstand zueinander an die Weite der Führungen 18, 19 angepaßt ist und die mit den Führungen 18, 19 zusammenwirken können. Die Führungen 18, 19 können bei mittiger Halteposition des Transportwagens 14 über jedem der Becken 11 von den Verspannmitteln 50, 51 festgesetzt werden. Die Verspannmittel 50, 51 können hierbei ortsfeste Klemmbacken sein, die die Führungen 18, 19 in der Halteposition des Transportwagens 14 an ihrem freien Ende einspannen. Die Verspannmittel 50, 51 sind an Paaren von längs verlaufenden Trägern 26, 27 angeordnet, die auf Ständern 48, 49 aufgeständert sind. Die Träger 26, 27 könnten auch auf eine andere Weise gebäudeseitig ortsfest verankert sein.

Der Schlitten 21 ist am Transportwagen 14 an Tragbändern 30, 31 angehängt, die mittels eines Hubantriebsmotors 34 auf Trommeln 32, 33 aufwickelbar sind. Mit ihnen kann der Schlitten 21 in den verschiedenen Höhenpositionen in den Führungen 18, 19 gehalten werden, die er zu keinem Zeitpunkt während des Hoch- und Runterfahrens verläßt. Die ersten Führungen 18, 19 enden kurz oberhalb der Becken 11.

Am Schlitten 21 ist ein Korbträger 41 um eine horizontale Schwenkachse 42 schwenkbar aufgehängt, die in Richtung der Transportrichtung liegt. Am Korbträger 41 sind Greifermittel 43 beweglich angeordnet, die den Transportkorb 44, der mit durchbrochenem Mantel ausgeführt ist, am oberen Korbrand 45 greifen können.

In Figur 4 ist der Schlitten 21 in den ersten Führungen 18, 19 zwischen die ortsfesten Verspannmittel 51, 52 über einem der Becken 11 eingefahren, wobei die untere Kante des an dem Korbträger 41 angehängten Transportkorbes 44 über der oberen Kante des Beckens 11 liegt. In dieser Position des Schlittens 21 kann der Transportwagen 14 horizontal verfahren werden.

In Figur 4a ist dargestellt, wie der Schlitten 21 aus der in Figur 3 dargestellten Halteposition des Transportwagens 14 durch Abrollen der Tragbänder 30, 31 in den Führungen 18, 19 abgesenkt worden ist, wo er an deren unterem Ende angehalten ist. Der Transportkorb 44 taucht in dieser Position des Schlittens 21 weitgehend unter die Oberfläche 13 der Behandlungsflüssigkeit 12 ein. Die Verspannmittel 50, 51 werden aktiviert und spannen die Führungen unmittelbar oberhalb des Schlittens ein. In dieser Position des Transportkorbes kann dieser mittels eines Drehantriebsmotors 46 um seine Achse angetrieben werden, um die Massenteile im Transportkorb 44 in der Behandlungsflüssigkeit zu behandeln.

Wie in Figur 4b dargestellt ist, kann der Transportkorb 44 bei am unterem Ende der Führungen 18, 19 in unveränderter Position gehaltenem Schlitten 21 mit dem Korbträger 41 um eine horizontale Achse 42 aus der zuvor senkrechten in eine geneigte Stellung geschwenkt werden. Der Transportkorb bewegt sich hierbei bis nahe an den Rand des seitlich versetzten Beckens 11₁. In dieser geneigten Stellung taucht der Transportkorb 44 nur noch teilweise unter den Flüssigkeitsspiegel 13 der Behandlungsflüssigkeit 12 ein. In der geneigten Stellung ist der Transportkorb von einem Drehantriebsmotor 46 im Korbträger 41 rotierend antreibbar, so daß die im Transportkorb 44 enthaltenen Massenteile ständig in der Behandlungsflüssigkeit umgewälzt werden.

In Figur 4c ist eine Position des Schlittens 21 gezeigt, die gegenüber den in den Figuren 4a und 4b gezeigten Behandlungspositionen angehoben ist. Der Schlitten 21 befindet sich hierbei unmittelbar oberhalb der Verspannmittel 50, 51 und der Transportkorb 44 liegt mit seiner unteren Kante oberhalb des Flüssigkeitsspiegels 13. In dieser Position kann der Transportkorb 44 vom Drehantriebsmotor 46 im Korbträger 41 mit hoher Drehzahl angetrieben werden, wobei an den Massenteilen anhaftende Behandlungsflüssigkeit durch den durchbrochenen Korbmantel abgeschleudert wird.

Im Anschluß an diesen Vorgang kann der Schlitten 21 wieder in die in Figur 3 gezeigte Transportposition angehoben werden, wonach der Transportwagen 14 dann auch den Schienen 16, 17 horizontal zu nächsten Becken 11 verfahren werden kann, welches mit einer andersartigen Behandlungsflüssigkeit oder Spülflüssigkeit gefüllt ist, wo sich der hier gezeigte Vorgang mit den Schritten wie in Figur 4 unter a, b, c gezeigt erneut abläuft.

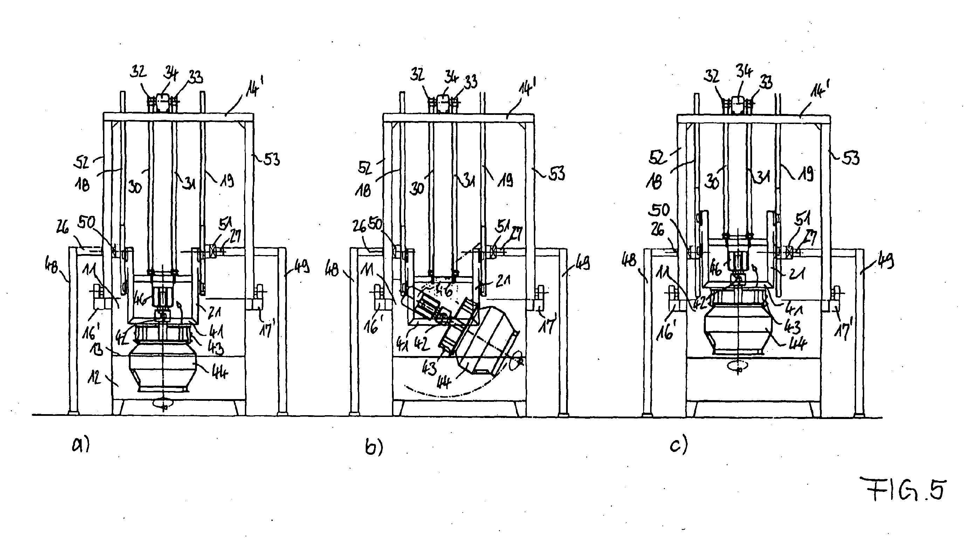

In Figur 5 ist eine Anlage ähnlich der in Figur 4 gezeigten analog den dort gezeigten Positionen des Schlittens 21 und des Korbträgers 41 in drei verschiedenen Stellungen gezeigt. Abweichend von der Darstellung nach Figur 4 ist hierbei ein Schienenpaar 16', 17' am Rand des Beckens 11 angeordnet, welches längs der Reihe von Becken 11 verläuft. Der Wagen 14' ist bei gleicher Ausführung der Führungen 18, 19 wie in Figur 4 hierbei als Portalwagen mit hohen Beinen 52, 53 ausgeführt, der auf den Schienen 16', 17' läuft und längs über die Reihe der Becken verfahrbar ist. Im übrigen wird auf die Beschreibung der Figur 4 Bezug genommen.

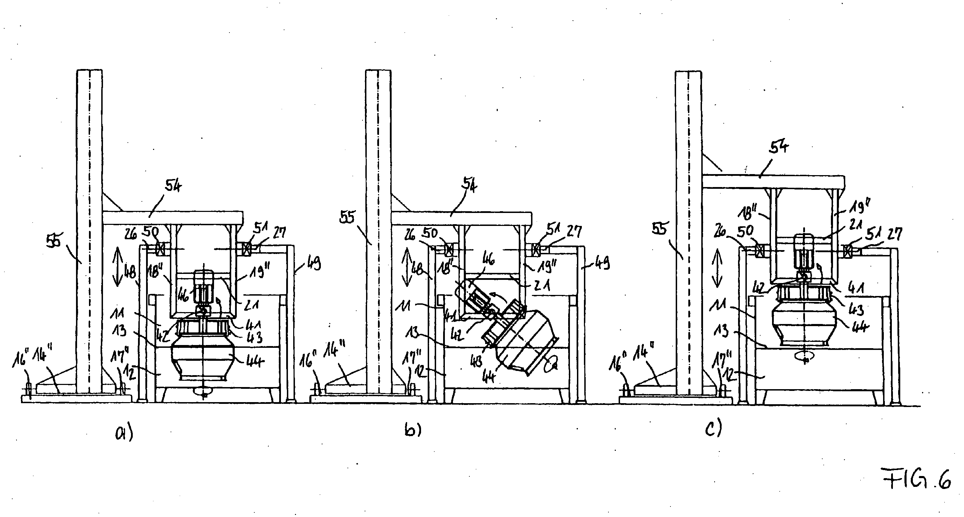

In Figur 6 ist eine Anlage ähnlich der in Figur 4 gezeigten analog den dort gezeigten Positionen des Schlittens 21 und des Korbträgers 41 in drei verschiedenen Stellungen gezeigt. Ein Wagen 14" ist als Seitenlaufwagen ausgeführt, der auf einem Schienenpaar 16", 17" seitlich längs der Becken 11 verfahrbar ist. An dem Wagen 14" ist an einem vertikalen Ständer 55 ein höhenverstellbarer Kragarm 54 befestigt, an dem kürzere erste Schienen 18", 19" befestigt sind, in denen ein Schlitten 21 eingesetzt ist. Im übrigen wird auf die Beschreibung der Figur 4 verwiesen. Gleiche Einzelheiten sind mit gleichen Bezugsziffem belegt. Die hier gezeigte Ausführungsform kann auch dahingehend abgewandelt werden, daß der Kragarm 54 in einer hohen Position am Seitenlaufwagen angeordnet ist, wobei dann der Schlitten 21 in entsprechenden längeren ersten Führungen 18, 19 wie in den vorher beschriebenen Ausführungen mittels Tragebändern höhenverstellbar gehalten sein könnte.

Die Führungen 18, 19 werden in den Ausführungen nach den Figuren 5 und 6 von den Verspannmitteln 50, 51 in den dargestellten Positionen eingespannt.

### Bezugszeichenliste

- 11: Becken
- 12: Flüssigkeit
- 13: Flüssigkeitsspiegel
- 14: Transportwagen
- 15: Fahrantriebsmotor
- 16: Fahrschiene
- 17: Fahrschiene
- 18: Führung
- 19: Führung
- 20: Erweiterung
- 21: Schlitten
- 22: Führung
- 23: Führung
- 24: Führung
- 25: Führung
- 26: Träger
- 27: Träger
- 28: Träger
- 29: Träger
- 30: Trageband
- 31: Trageband
- 32: Rolle
- 33: Rolle
- 34: Hubantriebsmotor
- 35 36: Anhängelasche
- 37: Anhängelasche
- 38: Ständer
- 39: Ständer
- 40 41: Korbträger
- 42: Schwenkachse
- 43: Greifer
- 44: Korb
- 45: Korbrand
- 46: Drehantriebsmotor
- 47 48: Ständer
- 49: Ständer
- 50: Verspannmittel
- 51: Verspannmittel
- 52: Beine
- 53: Beine
- 54: Kragarm

## Patentansprüche

1. Anlage zum Behandeln von in Transportkörben (44) enthaltenen Massenteilen in Flüssigkeiten (12), umfassend
zumindest ein Becken (11), das Flüssigkeit (12) enthält, zum Eintauchen der Transportkörbe (44),
mindestens einen Transportwagen (14), mit dem die Transportkörbe (44) über das zumindest eine Becken (11) verfahrbar sind, **gekennzeichnet durch**
mindestens einen Korbträger (41), der höhenverstellbar am Transportwagen (14) angeordnet ist und der einen Transportkorb (44) greifen, in das Becken (11) eintauchen, aus dem Becken (11) ausheben und um eine Achse drehend antreiben kann, wobei der Korbträger (41) einen Schlitten (21) umfaßt, der in senkrechten Führungen (18, 19, 22, 23, 24, 25) verfahrbar ist, sowie Greifermittel (43) für den Transportkorb (44), wobei der Korbträger (41) mit den Greifermitteln (43) um eine horizontale Schwenkachse (42) gegenüber dem Schlitten (21) schwenkbar ist, und
Verspannmittel (50, 51) zum Verspannen des Korbträgers (41) gegenüber ortsfesten Teilen nahe dem zumindest einen Becken (11).

2. Anlage nach Anspruch 1,
**dadurch gekennzeichnet,**
**daß** der Transportwagen (14) auf in einem Gestell oder an einer Raumdecke angehängten Schienen (16, 17) über das zumindest eine Becken (11) verfahrbar ist.

3. Anlage nach Anspruch 1,
**dadurch gekennzeichnet,**
**daß** der Transportwagen (14) auf am Beckenrand des zumindest einen Beckens (11) angeordneten Schienen (16, 17) über das zumindest eine Becken (11) verfahrbar ist.

4. Anlage nach Anspruch 1,
**dadurch gekennzeichnet,**
**daß** der Transportwagen (14") auf seitlich entlang des zumindest einen Beckens (11) angeordneten Schienen (16, 17) verfahrbar ist und einen über das Becken (11) ragenden Kragarm (54) hat.

5. Anlage nach Anspruch 1.
**dadurch gekennzeichnet,**
**daß** der Transportwagen (14) erste senkrechte Führungen (18, 19) umfaßt, daß nahe dem zumindest einen Becken (11) zweite senkrechte Führungen (22, 23) ortsfest angebracht sind, in die der Schlitten (21) bei fluchtenden ersten und zweiten Führungen (18, 19, 22, 23) überführbar ist, und daß die Verspannmittel zumindest in einer Eintauchposition des Transportkorbes (44) im Becken (11) unter den Flüssigkeitsspiegel (13) zwischen dem Schlitten (21) und den ortsfesten zweiten Führungen (22, 23) zur Wirkung bringbar sind.

6. Anlage nach Anspruch 1,
**dadurch gekennzeichnet,**
**daß** der Transportwagen (14) erste senkrechte Führungen (18, 19) umfaßt und daß nahe dem zumindest einen Becken (11) dritte senkrechte Führungen (24, 25) ortsfest angebracht sind, in die der Schlitten (21) bei fluchtenden ersten und dritten Führungen (18, 19, 24, 25) überführbar ist, und daß die Verspannmittel in einer Abschleuderposition des Transportkorbes (44) im Becken (11) oberhalb des Flüssigkeitsspiegels (13) zwischen dem Schlitten (21) und den ortsfesten dritten Führungen (24, 25) zur Wirkung bringbar sind.

7. Anlage nach Anspruch 1,
**dadurch gekennzeichnet,**
**daß** der Transportwagen (14) erste senkrechte Führungen (18, 19) umfaßt, und daß nahe dem zumindest einen Becken (11) Verspannmittel (50, 51) ortsfest angebracht sind, in die die ersten senkrechten Führungen (18, 19) einfahrbar sind, und daß die ortsfesten Verspannmittel (50, 51) gegenüber den ersten Führungen (18, 19) zumindest in einer Abschleuderposition des Transportkorbes (44) im Becken (11) oberhalb des Flüssigkeitsspiegels (13) zur Wirkung bringbar sind.

8. Anlage nach einem der Ansprüche 1 bis 7,
**dadurch gekennzeichnet,**
**daß** der Korbträger (41) Drehantriebsmittel (46) für den Transportkorb (44) umfaßt.

9. Anlage nach Anspruch 1,
**dadurch gekennzeichnet,**
**daß** die horizontale Schwenkachse (42) parallel zur Transportrichtung des Transportwagens (14) verläuft.

10. Anlage nach einem der Ansprüche 1 bis 9,
**dadurch gekennzeichnet,**
**daß** der Korbträger (41) über aufrollbare Transportbänder (30, 31) am Transportwagen (14) aufgehängt ist.

11. Anlage nach einem der Ansprüche 1 bis 10,
**dadurch gekennzeichnet,**
**daß** der Korbträger (41) vom Transportwagen (14) lösbar ausgebildet ist.

12. Anlage nach einem der Ansprüche 1 bis 11,
**dadurch gekennzeichnet,**
**daß** Mittel zur Energiezufuhr für den Drehantrieb und/oder den Schwenkantrieb vom Transportwagen (14) zum Korbträger (41) führen.

13. Anlage nach Anspruch 11,
**dadurch gekennzeichnet,**
**daß** Mittel zur Energiezufuhr für den Drehantrieb und/oder den Schwenkantrieb von den zweiten Führungen (22, 23) und/oder dritten Führungen (24, 25) zum Korbträger (41) führen, die trennbar ausgeführt sind.

## Claims

1. A system for treating mass-produced parts in liquids (12), which mass-produced parts are contained in transport baskets (44), comprising
at least one reservoir (11) which contains the liquid (12) and which is provided for immersing the transport baskets (44);
at least one transport carriage (14) by means of which the transport baskets (44) can be moved across the at least one reservoir (11),
**characterised**
**by** at least one basket carrier (41) which is arranged at the transport carriage (14) in such a way that its height can be adjusted and which is able to grip a transport basket (44), immerse same into the reservoir (11), lift same out of the reservoir (11) and rotatingly drive same around an axis, wherein the basket carrier (41) comprises a slide (21) which can be moved in vertical guides (18, 19, 22, 23, 24, 25), as well as gripper means (43) for the transport basket (44), wherein the basket carrier (41), together with the gripper means (43), are pivotable around a horizontal pivot axis (42) relative to the slide (21), and
by clamping means (50, 51) for clamping the basket carrier (41) relative to stationary parts close to the at least one reservoir (11).

2. A system according to claim 1,
**characterised in**
**that** the transport carriage (14) can be moved across the at least one reservoir (11) on rails (16, 17) suspended in a rack or at a ceiling.

3. A system according to claim 1,
**characterised in**
**that** the transport carriage (14') can be moved across the at least one reservoir (11) on rails (16, 17) arranged on the reservoir edge of the at least one reservoir (11).

4. A system according to claim 1,
**characterised in**
**that** the transport carriage (14") is movable on rails (18, 17) arranged laterally along the at least one reservoir (11), and comprises a cantilever (54) projecting beyond the reservoir (11).

5. A system according to claim 1,
**characterised in**
**that** the transport carriage (14) comprises first vertical guides (18, 19), that close to the at least one reservoir (11), there are fixed second vertical guides (22, 23) into which the slide (21) can be transferred when the first and second guides (18, 19, 22, 23) are aligned, and that the clamping means can be made to operate between the slide (21) and the fixed second guides (22, 23), at least in a position when the transport basket (44) is immersed underneath the liquid level (13) in the reservoir (11).

6. A system according to claim 1,
**characterised in**
**that** the transport carriage (14) comprises first vertical guides (18, 19) and that, close to the at least one reservoir (11), there are fixed third vertical guides (24, 25) into which the slide (21) can be transferred when the first and third guides (18, 19, 24, 15) are aligned, and that the clamping means can be made to operate between the slide (21) and the fixed third guides (24, 25). When the transport basket (44) is in a centrifuging position in the reservoir (11) above the liquid level (13).

7. A system according to claim 1,
**characterised in**
**that** the transport carrier (14) comprises first vertical guides (18, 19) and that, close to the at least one reservoir (11), there are fixed clamping means (50, 51) into which the first vertical guides (18, 19) can be introduced and that the fixed clamping means (50, 51) can be made to operate relative to the first guides (18, 19) at least when the transport basket (44) is in a centrifuging position in the reservoir (11) above the liquid level (13).

8. A system according to any one of claims 1 to 7,
**characterised in**
**that** the basket carrier (41) comprises rotary driving means (46) for the transport basket (44).

9. A system according to claim 1,
**characterised in**
**that** the horizontal pivot axis (42) extends parallel to the transporting direction of the transport carrier (14).

10. A system according to any one of claims 1 to 9,
**characterised in**
**that** the basket carrier (41) is suspended at the transport carrier (14) via transport belts (30, 31), which can be wound up.

11. A system according to any one of claims 1 to 10,
**characterised in**
**that** the basket carrier (41) can be released from the transport carriage (14).

12. A system according to any one of claims 1 to 11,
**characterised in**
**that** energy supply means for the rotary drive and/or for the pivot drive lead from the transport carrier (14) to the basket carrier (41).

13. A system according to claim 11,
**characterised in**
**that** energy supply means for the rotary drive and/or for the pivot drive lead from the second guides (22, 23) and/or the third guides (24, 25) to the basket carrier (41), which are designed in such a way that they can be separated.

## Revendications

1. Installation pour le traitement dans des liquides (12) de pièces de série contenues dans des paniers de manutention (44), comprenant
au moins une cuve (11) qui contient un liquide (12) pour l'immersion des paniers de manutention (44),
au moins une benne de manutention (14) avec laquelle les paniers de manutention (44) peuvent être déplacés au-dessus de la au moins une cuve (11),
**caractérisée par**
au moins un support de panier (41) qui est monté sur la benne de manutention (14) de manière réglable en hauteur et qui peut saisir un panier de manutention (44), l'immerger dans la cuve (11), le soulever hors de la cuve (11) et l'entraîner en rotation autour d'un axe, le support de panier (41) comprenant un chariot (21) qui est déplaçable dans des rails de guidage perpendiculaires (18, 19, 22, 23, 24, 25) ainsi que des organes de préhension (43) pour le panier de manutention (44), le support de panier (41) pouvant pivoter avec les organes de préhension (43) par rapport au chariot (21) autour d'un axe de pivotement horizontal (42), et
des moyens d'haubanage (50, 51) pour haubaner le support de panier (41) par rapport à des éléments fixés à proximité de la au moins une cuve (11).

2. Installation selon la revendication 1,
**caractérisée en ce que**
la benne de manutention (14) est déplaçable au-dessus de la au moins une cuve (11) sur des rails (16, 17) suspendus dans un bâti ou à une voûte.

3. Installation selon la revendication 1,
**caractérisée en ce que**
la benne de manutention (14') est déplaçable au-dessus de la au moins une cuve (11) sur des rails (16, 17) montés sur le rebord de la au moins une cuve (11).

4. Installation selon la revendication 1,
**caractérisée en ce que**
la benne de manutention (14") est déplaçable sur des rails (16, 17) montés latéralement le long de la au moins une cuve (11) et comporte un bras en porte-à-faux (54) débordant au-dessus de la au moins une cuve (11).

5. Installation selon la revendication 1,
**caractérisée en ce que**
la benne de manutention (14) comporte des premiers rails de guidage perpendiculaires (18, 19), **en ce que** des deuxièmes rails de guidage perpendiculaires (22, 23), dans lesquels le chariot (21) peut être transféré lorsque les premiers et les deuxièmes rails de guidage perpendiculaires (18, 19, 22, 23) sont alignés, sont montés fixement à proximité de la au moins une cuve (11), et **en ce que** les moyens d'haubanage peuvent être mis en action entre le chariot (21) et les deuxièmes rails de guidage fixes (22, 23), au moins dans une position d'immersion du panier de manutention (44) dans la cuve (11) en dessous du niveau de liquide (13).

6. Installation selon la revendication 1,
**caractérisée en ce que**
la benne de manutention (14) comporte des premiers rails de guidage perpendiculaires (18, 19), **en ce que** des troisièmes rails de guidage perpendiculaires (24, 25), dans lesquels le chariot (21) peut être transféré lorsque les premiers et les troisièmes rails de guidage perpendiculaires (18, 19, 24, 25) sont alignés, sont montés fixement à proximité de la au moins une cuve (11), et **en ce que** les moyens d'haubanage peuvent être mis en action entre le chariot (21) et les troisièmes rails de guidage fixes (24, 25) dans une position de projection du panier de manutention (44) dans la cuve (11) au-dessus du niveau de liquide (13).

7. Installation selon la revendication 1,
**caractérisée en ce que**
la benne de manutention (14) comporte des premiers rails de guidage perpendiculaires (18, 19), **en ce que** des moyens d'haubanage (50, 51), dans lesquels les premiers rails de guidage perpendiculaires (18, 19) peuvent être rentrés, sont montés fixement à proximité de la au moins une cuve (11), et **en ce que** les moyens d'haubanage fixes (50, 51) peuvent être mis en action par rapport aux premiers rails de guidage (18, 19) au moins dans une position de projection du panier de manutention (44) dans la cuve (11) au-dessus du niveau de liquide (13).

8. Installation selon l'une quelconque des revendications 1 à 7,
**caractérisée en ce que**
le support de panier (41) comporte des moyens d'entraînement rotatifs (46) pour le panier de manutention (44).

9. Installation selon la revendication 1,
**caractérisée en ce que**
l'axe de pivotement horizontal (42) s'étend parallèlement au sens de transport de la benne de manutention (14).

10. Installation selon l'une quelconque des revendications 1 à 9,
**caractérisée en ce que**
le support de panier (41) est suspendu dans la benne de manutention (14) au moyen de bandes transporteuses enroulables (30, 31).

11. Installation selon l'une quelconque des revendications 1 à 10,
**caractérisée en ce que**
le support de panier (41) est conçu pour pouvoir être détaché de la benne de manutention (14).

12. Installation selon l'une quelconque des revendications 1 à 11,
**caractérisée en ce que**
des moyens d'alimentation en énergie pour l'entraînement rotatif et/ou l'entraînement pivotant sont posés entre la benne de manutention (14) et le support de panier (41).

13. Installation selon la revendication 11,
**caractérisée en ce que**
des moyens d'alimentation en énergie pour l'entraînement rotatif et/ou l'entraînement pivotant, qui peuvent être déconnectés, sont posés entre les deuxièmes rails de guidage (22, 23) et/ou les troisièmes rails de guidage (24, 25) et le support de panier (41).
